# EUROPEAN PATENT APPLICATION

(11) **EP 0 821 034 A2**
(43) Date of publication of application: **28.01.1998**
(21) Application number: 97305438.0
(22) Date of filing: 21.07.1997
(51) Int. Cl.: C08L 33/14, C08L 33/06

(54) **Compatible and miscible copolymer compositions**

(30) Priority: 23.07.1996 US 22347
(71) Applicant: ROHM AND HAAS COMPANY, Philadelphia, Pennsylvania 19106-2399 (US)
(72) Inventor: La Fleur, Edward Ewart, Warminster, Pennsylvania 18974 (US)
(74) Representative: Tanner, James Percival

(57) **Abstract**

Novel compatible blends, suitable for use in films and sheet, are prepared from thermoplastic blends of a first soft (meth)acrylic ester copolymer containing units derived from poly(alkyleneoxy)(meth)acrylates with a second harder (meth)acrylic ester copolymer. Within a narrowed compositional range of these compositions are found optically clear, miscible blends, suitable for use in films, sheet, rods, or optical fibers, and as a laminating copolymer for glass.

## Description

This invention relates to novel compatible blends of (meth)acrylic copolymers, which blends comprise an unique combination of defined proportions of low and high glass temperature (meth)acrylic copolymers, useful for a range of elastomeric, "thermoplastic elastomeric", and semi-rigid applications. The invention further relates to optically transparent miscible thermoplastic compositions of matter comprising a unique combination of narrower defined proportions of low and high glass temperature acrylic copolymers, useful for a range of clear or pigmented elastomeric, "thermoplastic elastomeric", and semi-rigid applications. More specifically, this invention relates to thermoplastic compatible or miscible blends of a first low glass temperature(meth)acrylic ester copolymer containing units derived from poly(alkyleneoxy) (meth)acrylates with a second higher glass temperature (meth)acrylic ester copolymer.

A need exists for non-crosslinked, preferably optically clear, thermally and photochemically stable elastomeric materials which exhibit varying degrees of flexibility, are thermoplastic, are non-plasticized, and are capable of undergoing reversible deformation at relatively low stresses, are generally amorphous and have low glass transition temperatures. Materials of this nature will be particularly useful as photon transmitters and (when clear) as interlayers in safety glazing, visors for protective suits, optical couplings to advanced graphic displays, components of electronic apparatus, and optical lens applications.

Polymers of alkyl and alkoxyalkyl acrylates or methacrylates having appropriate side-chain substitution meet many of these needs, but when their glass temperature is sufficiently low (below about 0 °C.) to obtain the desired flexibility, the resulting copolymers do not have the appropriate rigidity and resistance to long-term flow or creep that is desired. Cross-linking may overcome this latter problem, but the resulting materials are then no longer thermoplastic. Combinations of copolymers as core/shell copolymers, as simple or gradient copolymers, as interpenetrating networks, or as multiple domain elastomers, have been only partially successful in achieving the desired balance of properties.

Makower et al., European Patent Application 583,926, discloses an improved method for preparing thermoplastic acrylic based multi-stage copolymers with an attractive balance of compression set, tensile strength, tensile elongation, and brittle temperature values, useful as weatherable thermoplastic elastomers, wherein a second stage harder (glass temperature above 20 °C.) copolymer is dispersed in multiple fine domains, preferably less than 200 nm., throughout the elastomeric network of the soft (glass temperature below 20 °C.) core copolymer. However, the preparation requires specific control of the reaction conditions, including the use of "graft-linking" and/or crosslinking monomers and also the presence of a copolymerizable acid in the core copolymer. Further, because the two components are not miscible on a molecular scale, they will exhibit poorer optical properties, especially in haze, than if the components are fully miscible. Thus, the problem remains to define an acrylic composition useful for non-crosslinked, thermally and photochemically stable, preferably optically clear elastomers and related uses.

I have found a novel method for combining the plasticizing action of poly(ethylene oxide) or other poly(alkylene oxides) towards (meth)acrylate copolymers with the reinforcing action of a copolymer relatively rich in methyl methacrylate, the copolymers being compatible (i.e. exhibiting physical properties consistent with at least an average of the properties of the two components), and preferably miscible (i.e., no domains being detected of size above 50 nm., and with a single glass transition temperature (Tg)). Specifically, I have found an compatible composition which is a compatible blend comprising:
(a) from 5 to 95 weight percent of a first copolymer of::
   (i) from 5 weight percent to 95 weight percent of polymerized units of at least one alkyl (meth)acrylate;
   (ii) from 5 to 95 weight percent of polymerized units of at least one poly(alkyleneoxy) (meth)acrylate of the formula

      CH₂=CR-C(O)-O-(CH₂-CHR₁-O)ₙ-R₂,
wherein R and R₁ separately are H or CH₃, wherein R₂ is H, C₁ - C₂₀ alkyl, C₆ - C₂₀ aryl, or C₇ - C₁₀ alkaryl; and wherein n is 1 to 1000, the glass temperature of the first copolymer being below 20°C.;
(b) from 5 to 95 weight percent of a second copolymer of:
   (i) at least 50 weight percent to 95 weight percent of polymerized units of at least one C₁-C₂₀ alkyl, cycloalkyl, C₆-C₂₀ aryl, or C₇ - C₁₀ alkaryl (meth)acrylate;
   (ii) from 5 to 50 weight percent of polymerized units of at least one C₁-C₂₀ alkyl acrylate;
the glass temperature of the second copolymer being above 20 °C. A preferred composition is wherein n is 1 to 100, and more preferred is wherein n is 3 to 50. Another preferred composition is wherein n is 3 to 50, wherein the alkyl (meth)acrylate of the first copolymer is ethyl acrylate, and wherein R is methyl, R₁ is H, and n is 10. An especially preferred composition is wherein the alkyl (meth)acrylate of the second copolymer is methyl methacrylate and the alkyl acrylate of the second copolymer is ethyl acrylate. Another preferred composition is wherein the weight-average molecular weight (M_{w}) of the first copolymer is from 20,000 to 150,000. Another preferred composition is wherein the weight-average molecular weight (M_{w}) of the second copolymer is from 30,000 to 500,000.

It is desirable that the first copolymer and the second copolymer be miscible and that the composition is optically clear. A preferred miscible composition is wherein the weight-average molecular weight (M_{w}) of the first copolymer is 30,000 or less, and the weight-average molecular weight (M_{w}) of the composition is from 30,000 to 45,000 when R₂ is H, and from 30,000 to 200,000 when R₂ is C₁-C₂₀ alkyl, C₆-C₂₀ aryl, or C₇-C₁₀ alkaryl. Within the miscible blend composition, a preferred composition is wherein the alkyl (meth)acrylate of the first copolymer is ethyl acrylate, wherein R is methyl, R₁ is H or CH₃ , R₂ is H or CH₃, wherein n is 10, and wherein the alkyl (meth)acrylate of the second copolymer is methyl methacrylate and the alkyl acrylate of the second copolymer is ethyl acrylate. An especially preferred composition which is miscible and optically clear comprises
(a) from 30 to 80 weight percent of a first copolymer of:
   (i) from 60 to 95 weight percent of polymerized units of at least one alkyl (meth)acrylate;
   (ii) from 5 to 40 weight percent of polymerized units of at least one poly(alkyleneoxy) (meth)acrylate of the formula

      CH₂=CR-C(O)-O-(CH₂-CHR₁-O)ₙ-R₂,
wherein R and R₁ separately are H or CH₃, wherein R₂ is H or -CH₃ and wherein n is 3 to 50; the glass temperature (T_{g}) (as measured by differential scanning calorimetry) of the first copolymer being below 20 °C. and the weight-average molecular weight (M_{w}) of the first copolymer being 30,000 or less;
(b) from 20 to 70 parts by weight of the first and second copolymers combined of a second copolymer derived from:
   (i) from 60 weight percent to 95 weight percent of polymerized units of methyl methacrylate;
   (ii) from 5 to 40 weight percent of polymerized units of at least one C₁ - C₂₀ alkyl acrylate;
the glass temperature of the second copolymer being above 20 °C. and the weight-average molecular weight (M_{w}) of the copolymer blend being from 30,000 to 45,000 when R₂ is H, and from 30,000 to 200,000 when R₂ is CH₃.

I have also discovered film, sheet, rod, or optical fiber prepared from the compositions described above, and further have discovered a composition wherein such a film is laminated between two sheets of glass or optically clear plastic.

A third polymer component may also be present, as long as it does not adversely affect the compatibility of the blend, or if the first and second copolymers are miscible, does not adversely affect the miscibility or clarity of the blend. That third component preferably is a polymer dissimilar from the first copolymer or second copolymer components, but of a composition within the limits described for the major components.

The first copolymer, which is a low glass transition temperature (T_{g}) component of the blend, is a copolymer of a selected alkyl acrylate or methacrylate and a poly(alkyleneoxy)acrylate or methacrylate. The poly(alkyleneoxy)(meth)acrylate co-monomer is of the general formula:

CH₂ = CR- CO₂ - (-CH₂CHR₁O)ₙ-R₂ (I)

where:
R represents H or CH₃, preferably CH₃;
R₁ represents H or CH₃;
R₂ represents H, CH₃, C₂H₅, C₃-C₂₀ alkyl, C₆-C₂₀ aryl or C₇-C₁₀ alkaryl and n_represents an integer from 1-1000; preferably 3-100; and most preferably 3-50.

The co-monomers defined by formula I are poly(ethyleneoxy) or poly(propyleneoxy) ester derivatives of acrylic or methacrylic acid. These (meth)acrylate ester co-monomers can have a terminal group which is hydroxy (i.e., R₂ is H, or may be "capped" with a C₁-C₂₀ alkyl group such as methyl, ethyl, butyl, octyl, dodecyl etc. or a C₆-C₂₀ aryl group such as phenyl, naphthyl, or a C₇-C₃₀ alkaryl group such as tolyl, methylnaphthyl, nonylphenyl , and the like. It is preferred that R₂ be either H or CH₃ when n is an integer between 3 and 50. When n is less than 3, R₂ should preferably be C₃-C₂₀ alkyl, C₆-C₂₀ aryl or C₇-C₃₀ alkaryl group. The methyl esters ,i.e. R = CH₃, are preferred because of their photochemical stability.

In the following discussion, a "low T_{g} component" means one whose homopolymer will exhibit a glass temperature below 20 °C., and a "high T_{g} component" means one whose homopolymer will exhibit a glass temperature (T_{g}) above 20 °C. In a similar manner, a low T_{g} copolymer will exhibit by itself a glass temperature (T_{g}) below 20 °C, and a high T_{g} copolymer will exhibit by itself a glass temperature (T_{g}) above 20 °C. The skilled artisan, knowing the glass temperatures of the homopolymers, can readily calculate compositions which will meet the glass temperature criteria for the various copolymers. The glass temperature (T_{g}) is measured by differential scanning calorimetry.

The low T_{g} (meth)acrylate component of the first stage copolymer may be at least one alkyl ester of (meth)acrylic acid, such as methyl acrylate, ethyl acrylate, propyl acrylate, isopropyl acrylate, n-butyl acrylate, sec-butyl acrylate, isobutyl acrylate, hexyl acrylate, heptyl acrylate, 2-heptyl acrylate, 2-ethylbutyl acrylate, dodecyl acrylate, , n-hexyl methacrylate, n-octyl methacrylate, 2-ethylhexyl methacrylate, n-decyl methacrylate, lauryl methacrylate, tetradecyl methacrylate, octadecyl methacrylate, and the like.

The high T_{g} (meth)acrylate component of the first stage copolymer may be at least one C₁-C₂₀ alkyl, cycloalkyl, C₆-C₂₀ aryl, or C₇ - C₁₀ alkaryl (meth)acrylate selected from at least one alkyl or alkylthioalkyl ester of (meth)acrylic acid, such as t-butyl acrylate, isobornyl acrylate, cyclohexyl acrylate, methyl methacrylate, ethyl methacrylate, n-propyl methacrylate, isopropyl methacrylate, sec-butyl methacrylate, isobutyl methacrylate, t-butyl methacrylate, cyclohexyl methacrylate, isobornyl methacrylate, phenyl methacrylate, benzyl methacrylate, 3,3,5-trimethylcyclohexyl methacrylate, and the like.

The (meth)acrylic copolymers described in this invention may be prepared by a process of in-situ bulk or emulsion copolymerization utilizing commercially available monomers. Other suitably adapted copolymerization methods such as solution and suspension copolymerization techniques may also serve to prepare the copolymers. The copolymers may be separately prepared and blended by conventional means. One preferred method, which forms an intimate blend of the two copolymers without additional mixing, is the use of a continuous feed stirred tank reactor (CFSTR), such as polymerizing the first copolymer in bulk and then transferring that copolymer, along with the monomers which form the second copolymer, into a CFSTR. If a small amount of unreacted monomer is carried into the second copolymerization, miscibility of the two copolymers will in general be increased.

In the specification and Tables, PEG-MMA refers to a specific macromonomer which has a methacrylate ester group at one end only of a poly(ethylene glycol) of MW 400 ( 9 - 10 ethylene oxide units), the other end being a -OH group, while PEG-MM-MMA refers to a similar macromonomer but with a -OCH₃ group at the other terminal. However, the macromonomer may be based on poly(alkylene oxides) of higher and lower degrees of polymerization, as defined by n. The weight average molecular weight is measured by gel permeation chromatography against a poly(methyl methacrylate) standard The defined molecular weight ranges are adequate to facilitate ease of processing, and thermal and rheological stability of blend compositions. The narrower ranges and lower values in the compositions which are miscible reflect improved miscibility at lower molecular weights for at least one of the components.

In the course of thermal processing, small quantities of additives may be added to the composition for the purpose of improving the physical properties of the final article of commerce. Examples of additives may include one or many of the following classes of compounds: antioxidants, ultraviolet light absorbers, plasticizers, antistatic agents, slip agents, coloring agents, fillers and other compounds.

Within the family of components making up the compatible blends is a narrower family which yield truly miscible blends, as judged by the criteria of single glass temperature combined with optical clarity. Neither criteria alone is sufficient, in that clear blends can be prepared from compatible immiscible copolymers whose refractive indices are very similar, and a blend having a single glass temperature can be formed from two immiscible copolymers which have similar glass temperatures.

Thus, a preferred aspect present invention is a family of novel optically transparent compositions of matter comprising a unique combination of defined proportions of low and high T_{g} acrylic first and second copolymers, where T_{g} refers to the glass temperature of the individual components. The considerable synergism that exists between the components of the systems results in miscible copolymeric compositions. This invention provides unique compositions of optical grade thermoplastics that can be formulated to span a wide range of optical and mechanical properties. Thus, the invention may provide optically clear, thermally, photochemically and hydrolytically stable thermoplastics that are either soft and flexible or hard and stiff; novel optically clear elastomeric thermoplastic compositions, i. e. "thermoplastic acrylic elastomers" which have superior low temperature impact property and high tensile modulus (relative to a conventional elastomer) at ambient temperature; and optically transparent non-crosslinked elastomeric compositions. The combination of properties such as flexibility, heat resistance, absence of haze, absence of flow under stress is useful for optical applications such as lens and light conduits. These blends are expected to show an absence of undesirable yellowing and pearlescence due to phase separation. The blends may also be dyed to yield films and or optical fibers of uniform texture. The optical grade rubbery acrylic thermoplastic materials can be extruded or blown into thin films or molded into useful objects. An unexpected advantage is that the rubbery acrylic thermoplastic adheres well to plastic, glass, cellulosic and metal surfaces, and also to inorganic oxide particles.

Certain of these blends will be useful when combined with conductive ionic salts, such as lithium conductive salts, in the construction as batteries where the combination can serve as solid polymeric electrolytes. This aspect of their use will be the subject of two patent applications to be filed simultaneously with the present application.

For uses where the formed material needs to retain shape and avoid viscous flow, such as in a optical light pipe or fiber, especially when exposed to temperatures above room temperature, one or both stages may be prepared with reactive functionality, and that functional used subsequently to "cure" the shaped two-stage copolymer mixture. An effective process for preparation of flexible light pipe, including preparing and curing of such compositions, is disclosed in U. S. Patent 5,406,641. One or more functionally reactive monomers are incorporated into the uncrosslinked copolymer of the crosslinkable core mixture and are selected for their copolymerizability with the bulk monomer(s) and for their utility in the subsequent crosslinkable core mixture curing reaction. As "curable" monomers, the functionally reactive monomers are mono-unsaturated compounds with an additional "reactive" component. Examples of functionally reactive co-monomers useful in the invention include, but are not limited to, hydroxyethyl (meth)acrylate, 2-hydroxypropyl (meth)acrylate; glycidyl (meth)acrylate; alkoxysilane monomers such as 2-methacryloxyethyl-trimethoxysilane, 3-methacryloxypropyltrimethoxysilane , and 3-acryloxypropyltrimethoxysilane. Useful weight ratios of the sum of bulk monomer(s) to the functionally reactive monomer(s) in the uncrosslinked copolymer of the crosslinkable core mixture are from about 80/20 to 99.9/0.1; when the functionally reactive monomer is a silane, preferable use ratios are from about 90/10 to about 98/2, and most preferably 94/6 to 98/2. Other useful functionally reactive monomers and their cure are disclosed in the '641 reference.

The following describes in general the copolymerization process, fabrication techniques, and physical testing methods. All compositions referred to in the examples are in weight percent unless otherwise specified.

### EXAMPLE A

### Bulk Copolymerization of the First and Second Copolymers: Procedure

First Copolymer: The first copolymer may be prepared by a bulk copolymerization technique as exemplified by the following: A monomer mixture was prepared, having ethyl acrylate (EA): monomethoxy poly(ethylene glycol (400) monomethacrylate) (M#1) ratio of 9:1. The mixture contained 87.7% of ethyl acrylate (EA), 9.7% of monomethoxy poly(ethylene glycol (400) monomethacrylate), 0.07% of 1, 1'-azobis-(cyclohexanecarbonitrile) and 2.44% of n-dodecyl mercaptan. This mixture was fed into a glass vessel in which the mixture was purged with an inert gas such as nitrogen. After purging, the monomer mixture was degassed and kept under a nitrogen blanket. The mixture was then pumped at a maximum rate of 15 g/min. through a series of filters into the continuous flow stirred tank reactor (CFSTR) in which the monomers were copolymerized to yield 86 weight percent monomer conversion. The copolymerization was accomplished at temperatures ranging from 105 to 125°C. At this temperature range, the operating pressure and stirring rate was set at 120 psi and 300 RPM respectively. Since the copolymerization reaction is exothermic, the reactor temperature was controlled with the aid of a cooling jacket. The copolymerization was performed neat, i.e. in the absence of a solvent.

Second Copolymer: The mixture comprising the first copolymer and residual monomer was then dissolved in a monomer mixture which comprises the following ingredients: 49.9 weight percent of the first copolymer, 29.9 weight percent of methyl methacrylate (MMA), 19.9 weight percent of EA, 0.03% of 1,1'-azobis(cyclohexanecarbonitrile) and 0.25% of n-dodecyl mercaptan. The mixture was similarly purged with nitrogen, degassed and kept under a nitrogen blanket. The degassed mixture was fed through a series of filters at a maximum rate of 15 g/min. into a CFSTR in which the final stage copolymerization occurs to yield a molecularly miscible blend of the two copolymers. The formation of the second copolymer was similarly carried out at temperatures ranging from 120 to 125 oC. The stirring rate and pressure were the same as that used in the preparation of the first copolymer. Unpolymerized MMA, EA and monomethoxy poly(ethylene glycol (400) monomethacrylate) were removed from the two stage copolymer solution effluent in a stripping action with a static mixer equipped with a vacuum pump. The overhead fraction from the stripping column comprising of unpolymerized monomers may be passed to a recovery system or, preferably, recycled to the second stage of the copolymerization process.

The residence time in the copolymerization reaction vessel (CFSTR), the monomer feed rate, the initiator and chain transfer concentration and the copolymerization temperature were arranged in order to ensure monomer conversion ranging from 80 to 90 weight percent.

### EXAMPLE B

### Emulsion Copolymerization of the First and Second Copolymers: Procedure

The copolymeric components of the composition may also be prepared by emulsion copolymerization. An example of the general procedure follows.

First Copolymer: A monomer mixture was prepared, having a ethyl acrylate(EA): monomethylether-poly(ethylene glycol(400)-monomethacrylate (M#1) ratio of 90:10. The mixture contained 54.9% of EA, 6.1% of M#1, 1.5% of n-dodecyl mercaptan, 36.7% of deionized (DI) water and 0.8% of a 10% aqueous sodium dodecylbenzene sulphonate solution. To an appropriate glass vessel equipped with stirrer, heater, a reflux condenser, and nitrogen sparge tube, was added 97.2% of DI water and 0.03% of sodium carbonate. The mixture was sparged for one hour with nitrogen while heating to 70 °C. The sparge rate was then changed to a sweep and 2.7% of a 10% aqueous sodium dodecylbenzene sulphonate solution was added to the mixture. The temperature of the reaction vessel was then raised to 85 °C. At this temperature 18.03 ml of the initiator mixture which consisted of 0.34% of sodium persulfate and 99.7% of deionized water was added to the reaction vessel. The monomer mixture was then fed into the reaction vessel at the rate of 7.56 ml/min. As the copolymerization proceeded, the initiator mixture was added to the reaction vessel at the rate of 1.3 ml/min. The accumulation of solids was measured every 30 minutes. At the completion of the initiator and monomer addition, the mixture was held at 85°C for one hour. The mixture was then cooled and stored in a polyethylene jar in preparation for the second and final stage of the copolymerization.

Second Copolymer: A second copolymer which is a copolymer of methyl methacrylate (MMA) and EA was formed in the presence of the first copolymer by an in-situ emulsion copolymerization technique as follows: A monomer mixture was prepared, having MMA: EA ratio of 60:40. The mixture contained 37.2% of MMA, 24.8% of EA, 0.3% of n-dodecyl mercaptan, 36.5% of DI water and 1.2% of a 10% aqueous sodium dodecylbenzene sulphonate solution. The monomer mixture was copolymerized according to the following procedure. To an appropriate glass vessel equipped with stirrer, heater, a reflux condenser, and nitrogen sparge tube, was added: 67.9% of the emulsion of the first copolymer, and 32.1% of DI water. The mixture was sparged for one hour with nitrogen while heating to 70 °C. The sparge rate was then changed to a sweep. The temperature of the reaction vessel was then raised to 85 °C. At this temperature 17.63 ml. of the initiator mixture which consisted of 0.22% of sodium persulfate and 99.78% of deionized water was added to the reaction vessel. The monomer mixture was then fed into the reaction vessel at the rate of 4.30 ml./min. As the copolymerization proceeded, the initiator mixture was added to the reaction vessel at the rate of 1.17 ml/min. The accumulation of solids was measured every 30 minutes. At the completion of the initiator and monomer addition, the mixture was held at 85 oC for one hour. The mixture was then cooled, filtered, and copolymer isolated by freeze-drying. The mixture of first and second copolymers may also be isolated from emulsion by spray-drying or by coagulation.

The resulting copolymer blends may be pressed by compression molding into plaques suitable for the measurement of optical properties or modulus values by conventional ASTM tests or for the determination of glass temperature by differential scanning calorimetry.

### Example 1:

Examples 1 - 6 describe preparation of several specific copolymer blends within and without the invention; some properties of the blends are summarized in Table I. The bulk copolymerization reaction technique which is outlined above is employed in the preparation of the two stage miscible copolymer system of the following composition: The initial stage copolymer comprises ethyl acrylate (EA) and poly(ethylene glycol (400) monomethacrylate), where the hydroxy terminal group is not capped or reacted, in the weight ratio of 19:1 respectively. The final stage is a copolymer of MMA and EA, in the weight ratio of 3:2 respectively, and constitutes a total of 60% w/w of the two stage copolymer content. The final blend is optically clear, and exhibits significant adhesion to glass and metal substrates.

### Example 2:

Using the previously described bulk copolymerization process, a two stage miscible binary copolymer system is prepared as follows: The copolymeric matrix is synthesized by in situ copolymerization of a high Tg (ca. 42°C) copolymer, P(MMA-EA = 60/40), in the presence of a dispersed low Tg (ca. -53°C) copolymer, P(EA-poly(ethylene glycol (400) monomethacrylate). The latter copolymer is prepared from a monomer mixture of ethyl acrylate and poly(ethylene glycol (400) monomethacrylate) in the weight ratio of 9:1 respectively, to yield an optically clear copolymer. This copolymer is then dissolved and subsequently copolymerized in a monomer mixture, which comprises the copolymer, MMA and EA monomers in the weight ratio of 38:37:25 respectively, yielding an optically clear, tough, non-blocking copolymer that adheres readily to glass and metal substrates. A combination of optical microscopy and dynamic mechanical thermal analysis (DMTA) has shown that the above copolymer system exhibits all of the optical (clarity and dispersed phase < 10 nm in particle size) and thermal (single Tg) characteristics of a miscible copolymer system.

### Example 3:

A first copolymer, which comprises EA and poly(ethylene glycol (400) monomethacrylate) in the weight ratio of 19:1 respectively is prepared by the previously described bulk copolymerization process to yield a low molecular weight copolymer (below 150,000 daltons) (Table I). The first copolymer is dissolved in a monomer mixture comprising of MMA, EA, chain transfer agent and initiator to yield a mixture of the following composition: 40 weight % of an 85% w/w converted, poly(EA-poly(ethylene glycol (400) monomethacrylate)=90/10), 36 weight percent of MMA monomer and 24 weight percent of EA monomer. The entire mixture was fed to a CFSTR as previously described and copolymerized to yield an optically clear, miscible two stage copolymer system.

### Example 4:

A first copolymer, P(EA-poly(ethylene glycol (400) monomethacrylate)=90/05), of similar molecular weight, composition and degree of conversion, as defined in Example 3, is combined with MMA and EA monomers in the weight ratio of: 40:36:24 respectively. Chain transfer agent and initiator are added to the mixture prior to copolymerization in a CFSTR as previously described. It should be noted that for this example the amount of chain transfer agent used in Example 3 was reduced to yield a higher molecular weight copolymer. As seen in Table I, in spite of the fact that the composition of the copolymers defined in EX. 3 is identical to that described in this example, the increase in molecular weight of the second stage copolymer, P(MMA-EA = 60/40) yields a copolymeric composition that is opaque in appearance.

### Example 5:

A first copolymer comprising of EA and poly(ethylene glycol (400) monomethacrylate) in the weight ratio of 9:1 respectively, is combined with MMA and EA co-monomers. The composition of the monomer mixture is as follows: 30 weight percent of P(EA-poly(ethylene glycol (400) monomethacrylate)=90/10), 42 weight percent of MMA, and 28 weight percent of EA. The entire mixture is copolymerized, as previously described, to yield a two stage copolymer composite.

### Example 6:

The two stage copolymer of this example is prepared from a mixture which comprises: P(EA-poly(ethylene glycol (400) monomethacrylate)=90/10), MMA and EA monomers in the weight ratio of 40:36:24 respectively. This mixture is copolymerized in a CFSTR to yield the two stage copolymer composite.

### Example 7:

A two stage copolymer composite of similar composition to that described in Example 6 was prepared in a CFSTR to yield a copolymeric composition of weight average molecular weight 40 % lower than the two stage copolymer described in Example 6. As can be seen in Table I, this two stage copolymer is optically clear in appearance, whereas the copolymer composite of Example 6 is translucent in appearance.

**TABLE I:**

| Composition and Thermal Properties of Two Stage Acrylic Copolymers Based on MMA, EA and Poly(ethylene glycol (400) monomethacrylate) co-monomers. | | | | | |
|---|---|---|---|---|---|
| EXAMPLE | TWO STAGE POLYMER | COMP. (%w/w) | Mw (k) | Tg (°C.) | OPTICAL QUALITY |
| 1. | P(MMA/EA = 60/40)/ | | | | |
| | P(EA/PEG-MMA = 95/5) | 80/20 | 30 | -35.4 | CLEAR |
| | | | | | |
| 2. | P(MMA/EA = 60/40)/ | | | | |
| | P(EA/PEG-MMA = 90/10) | 62/38 | 36 | -45.6 | CLEAR |
| | | | | | |
| 3. | P(MMA/EA = 60/40)/ | | | | |
| | P(EA/PEG-MMA = 95/5) | 60/40 | 31 | -58.1 | CLEAR |
| | | | | | |
| 4. | P(MMA/EA = 60/40)/ | | | | |
| | P(EA/PEG-MMA = 95/5) | 60/40 | 74 | -34.1 | TRANSLUCENT |
| | | | | | |
| 5. | P(MMA/EA = 60/40)/ | | | | |
| | P(EA/PEG-MMA = 90/10) | 70/30 | 47 | -23.4 | TRANSLUCENT |
| | | | | | |
| 6. | P(MMA/EA = 60/40)/ | | | | |
| | P(EA/PEG-MMA = 90/10) | 60/40 | 60 | -21.5 | TRANSLUCENT |
| | | | | | |
| 7. | P(MMA/EA = 60/40)/ | | | | |
| | P(EA/PEG-MMA = 90/10) | 60/40 | 36 | -43.1 | CLEAR |

### Examples 8-11:

In these examples, the first copolymer is prepared from a monomer mixture comprising of EA and poly(ethylene glycol (400) monomethoxy monomethacrylate), i.e., the terminal hydroxy group has been replaced with a methoxy group, in the weight ratio of 9:1 respectively. The second stage copolymerization is carried out in a CFSTR from a mixture of the following weight ratio: P(EA-poly(ethylene glycol (400) monomethoxy monomethacrylate)=90/10): MMA: EA = 40:36:24. The chain transfer agent is varied to produce a range of molecular weight. The composition and physical properties of the copolymers are given in Table II.

### Example 12:

The first copolymer used in Examples 8-11 is combined with MMA and EA monomers and copolymerized in a CFSTR to yield a two stage copolymer composite of the following composition: 30 weight percent of P(EA-poly(ethylene glycol (400) monomethoxy monomethacrylate)=90/10), 42 weight percent of MMA and 28 weight percent of EA. The thermal and molecular properties of this system of copolymers are listed in Table II.

### Example 13:

In this example, which illustrates that macromonomers based on poly(propylene glycol) as well as poly(ethylene glycol) are useful, the first copolymer is prepared from a monomer mixture, which is comprised of poly(propylene glycol (400) monomethacrylate) and EA in the weight ratio of 9:1 respectively. The first copolymer is combined with MMA and EA in the weight ratio of: 40:36:24 respectively. The entire mixture is copolymerized in a CFSTR to yield an optically clear two stage copolymer. The properties of this copolymer system are listed in Table III.

### Example 14:

The first copolymer described in Example 13 is combined with MMA and EA monomers in the weight ratio of: 50:30:20 respectively. The mixture, combined with initiator and chain transfer agent, is fed into a CFSTR where it is copolymerized to yield an optically clear two stage copolymer composite. The physical properties of the copolymers are listed in Table III.

### Example 15:

This example elucidates the process of preparing a segmented two stage copolymer composite from a combination of an 85.3 weight percent converted EA, poly(propylene glycol (400) monomethacrylate) monomer mixture, MMA, EA and methacryloxytrimethylsilane (MATS). The mixture, which is comprised of 40 weight percent of the 85.3 % w/w converted EA, poly(propylene glycol (400) monomethacrylate) (9:1 in weight ratio respectively), 35.4 % w/w of MMA, 23.4 % w/w of EA and 1.2% w/w MATS, is treated with initiator, chain transfer agent and copolymerized as previously described to yield a segmented two stage copolymer. The thermomechanical properties are listed in Table III.

**TABLE II:**

| Composition and Thermal Properties of Two Stage Acrylic Copolymers Based on MMA, EA and Poly(ethylene glycol (400)-monomethoxy monomethacrylate) co-monomers. | | | | | |
|---|---|---|---|---|---|
| EXAMPLE | TWO STAGE POLYMER | COMP. (%w/w) | Mw (k) | Tg (°C) | OPTICAL QUALITY |
| 8. | P(MMA/EA = 60/40)/ | | | | |
| | P(EA/PEG-MM-MMA = 90/10) | 60/40 | 33 | -41.6 | CLEAR |
| | | | | | |
| 9. | P(MMA/EA = 60/40)/ | | | | |
| | P(EA/PEG-MM-MMA = 90/10) | 60/40 | 43 | -50.9 | CLEAR |
| | | | | | |
| 10. | P(MMA/EA = 60/40)/ | | | | |
| | P(EA/PEG-MM-MMA = 90/10) | 60/40 | 52 | -48.8 | CLEAR |
| | | | | | |
| 11. | P(MMA/EA = 60/40)/ | | | | |
| | P(EA/PEG-MM-MMA = 90/10) | 60/40 | 61 | -3.0 | CLEAR |
| | | | | | |
| 12. | P(MMA/EA = 60/40)/ | | | | |
| | P(EA/PEG-MM-MMA = 90/10) | 70/30 | 69 | -23.6 | CLEAR |

**TABLE III:**

| Composition and Thermal Properties of Two Stage Acrylic Copolymers Based on MMA, EA, MATS and Poly(propylene glycol (400)-monomethoxy monomethacrylate) co-monomers. | | | | | |
|---|---|---|---|---|---|
| EXAMPLE | TWO STAGE POLYMER | COMP. (%w/w) | Mw (k) | Tg (°C) | OPTICAL QUALITY |
| 13. | P(MMA/EA = 60/40)/ | | | | |
| | P(EA/PPG--MMA = 90/10) | 60/40 | 32 | -39.1 | CLEAR |
| | | | | | |
| 14. | P(MMA/EA = 60/40)/ | | | | |
| | P(EA/PPG-MMA = 90/10) | 50/50 | 33 | -31.9 | CLEAR |
| | | | | | |
| 15. | P(MMA/EA/MATS = 59/39/02)/ | | | | |
| | P(EA/PPG-MMA = 90/10) | 60/40 | -- | -22.2 | CLEAR |

### Example 16:

This Example illustrates that the copolymer of Example 14 can be used to laminate two layers of glass together without additional adhesive. A prototype of laminated safety glass (LSG) is prepared by compression molding for five minutes from a combination of plane glass of dimension: 6"x 6" x 1/16" (15.2 cm. x 15.2 cm. x 1.6 cm.) and, as adhesives, the two stage acrylic copolymer of Example 14, P(MMA-EA = 60/40)//P(EA-poly(propylene glycol (400) monomethacrylate)=90/10)=60:40 (Example 16-A), and Du Pont's safety glass interlayer material, Butacite(™)(Example 16-B). A temperature of 66 °C. and 800 psi ( 5.5 mPa) is employed. Testing is by falling dart ASTM D-3029 on 2.5" by 1.5" sections ( 6.35 x 3.8 cm.). The laminates of Examples 16-A and -B both exhibit comparable behavior as regards shatter pattern and adhesion of glass shards to the laminate adhesive. Example 16-A required 86 % less "energy to break" than Example 16-B.

### Example 17:

This Example gives further comparison of three composite copolymers in maximum load and total energy to break versus a commercial laminating adhesive, Butacite, believed to be a 77 % vinyl butyral/ 23 % vinyl alcohol copolymer. Although approximately equal maximum loading is seen, the total energy to break is significantly less than for Butacite. It is believed addition of additional crosslinking of raising of the molecular weight to the all-acrylic additives will improve this latter property.

| Example | | | | | |
|---|---|---|---|---|---|
| | | MW (first stage) | T_{g}, °C | Maximum Load, k | Total energy, Joules |
| Ex. 17- A | PMMA/EA// | 40,000 | -3.5 | 201 | 0.82 |
| | P(EA/MMEPEG(350)MMA/ | | | | |
| | PEG (200)diMA= 90/10/0.4 (3:2) | | | | |
| Ex. 17- B | PMMA/EA// | 51,000 | +1 | 192 | 0.68 |
| | P(EA/MMEPEG(350)MMA/ | | | | |
| | PEG(200)diMA= 90/10/0.4 (3:2) | | | | |
| Ex. 17-C | PMMA/EA// | 78,000 | +3 | 226 | 0.82 |
| | P(EA/MMEPEG(350)MMA/ | | | | |
| | PEG(200)diMA= 90/10/0.4 (3:2) | | | | |
| Ex. 17-C | PMMA/EA// | 78,000 | +3 | 226 | 0.82 |
| | P(EA/MMEPEG(350)MMA/ | | | | |
| | PEG(200)diMA= 90/10/0.4 (3:2) | | | | |
| Control | Butacite | 170,000 | -50 | 188 | 6.9 |

### Example 18:

The two stage miscible copolymer system may also be prepared by emulsion copolymerization of the above mentioned monomers. The initial stage copolymers comprising from 5 to 95 weight percent of PEG-MM-MMA and the remainder EA are prepared by an emulsion copolymerization technique as follows: A monomer mixture is prepared, having EA/ PEG-MM-MMA ratio of 90:10. The mixture contained 54.9% of EA, 6.1% of PEG-MM-MMA, 1.5% of N-dodecyl mercaptan, 36.7% of de-ionized (DI) water and 0.8% of a 10% aqueous sodium dodecylbenzene sulfonate solution. To an appropriate glass vessel equipped with stirrer, heater, a reflux condenser, and nitrogen sparge tube, is added 97.2% of DI water and 0.03% of sodium carbonate. The mixture is sparged for one hour with nitrogen while heating to 70 °C. The sparge rate is then changed to a sweep and 2.7% of a 10% aqueous sodium dodecylbenzene sulfonate solution is added to the mixture. The temperature of the reaction vessel is then raised to 85 °C. At this temperature 18.03 ml of an initiator mixture which consisted of 0.34% of sodium persulfate and 99.7% of deionized water is added to the reaction vessel. The monomer mixture is then fed into the reaction vessel at the rate of 7.56 ml/min. As the copolymerization proceeded, the initiator mixture is added to the reaction vessel at the rate of 1.3 ml/min. The accumulation of solids is measured every 30 minutes. At the completion of the initiator and monomer addition, the mixture is held at 85 °C for one hour. The mixture is then cooled and stored in a polyethylene jar in preparation for the second and final stage of the copolymerization.

The final stage copolymers comprising from 5 to 95 weight percent of MMA and the remainder EA monomer, plus 5 to 95 % of the earlier-formed first stage copolymer, P(EA/PEG-MM-MMA = 90/10), are prepared by an in situ emulsion copolymerization technique as follows: A monomer mixture is prepared, having MMA: EA ratio of 60:40. The mixture contained 37.2% of MMA, 24.8% of EA, 0.3% of N-dodecyl mercaptan, 36.5% of DI water and 1.2% of a 10% aqueous sodium dodecylbenzene sulfonate solution. The monomer mixture is copolymerized according to the following procedure. To an appropriate glass vessel equipped with stirrer, heater, a reflux condenser, and nitrogen sparge tube, is added: 67.9% of the initial stage emulsion and 32.1% of DI water. The mixture is sparged for one hour with nitrogen while heating to 70 °C. The sparge rate is then changed to a sweep. The temperature of the reaction vessel is then raised to 85 °C. At this temperature 17.63 ml of the initiator mixture which consisted of 0.22% of sodium persulfate and 99.78% of deionized water is added to the reaction vessel. The monomer mixture is then fed into the reaction vessel at the rate of 4.30 ml/min. As the copolymerization proceeded, the initiator mixture is added to the reaction vessel at the rate of 1.17 ml/min. The accumulation of solids is measured every 30 minutes. At the completion of the initiator and monomer addition, the mixture is held at 85 °C. for one hour. The mixture is then cooled, filtered and copolymer isolated by freeze-drying.

## Claims

1. A composition which is a compatible blend of
(a) from 5 to 95 weight percent of a first copolymer of::
(i) from 5 weight percent to 95 weight percent of copolymerized units of at least one alkyl (meth)acrylate;
(ii) from 5 to 95 weight percent of copolymerized units of at least one poly(alkyleneoxy) (meth)acrylate of the formula
CH₂=CR-C(O)-O-(CH₂-CHR₁-O)ₙ-R₂,
wherein R and R₁ separately are H or CH₃, wherein R₂ is H, C₁-C₂₀ alkyl, C₆ -C₂₀ aryl, or C₇ - C₁₀ alkaryl; and wherein n is 1 to 1000, the glass temperature of the first copolymer being below 20°C.;
(b) from 5 to 95 weight percent of a second copolymer of:
(i) at least 50 weight percent to 95 weight percent of polymerized units of at least one C₁-C₂₀ alkyl, cycloalkyl, C₆-C₂₀ aryl, or C₇-C₁₀ alkaryl (meth)acrylate;
(ii) from 5 to 50 weight percent of polymerized units of at least one C₁- C₂₀ alkyl acrylate;
the glass temperature of the second copolymer being above 20 °C.

2. The composition of claim 1 wherein n is 3 to 50.

3. The composition of claim 2 wherein the alkyl (meth)acrylate of the first copolymer is ethyl acrylate, and wherein R is methyl, R₁ is H, and n is 10.

4. The composition of claim 2 wherein the alkyl (meth)acrylate of the second copolymer is methyl methacrylate and the alkyl acrylate of the second copolymer is ethyl acrylate.

5. The composition of claim 1 wherein the weight-average molecular weight (M_{w}) of the first copolymer is from 20,000 to 150,000.

6. The composition of claim 1 wherein the weight-average molecular weight (M_{w}) of the second copolymer is from 30,000 to 500,000.

7. The composition of claim 1 which is optically clear and wherein the first copolymer and the second copolymer are miscible, the weight-average molecular weight (M_{w}) of the first copolymer being 30,000 or less, and the weight-average molecular weight (M_{w}) of the composition being from 30,000 to 45,000 when R₂ is H, and from 30,000 to 200,000 when R₂ is
C₁-C₂₀ alkyl, C₆- C₂₀ aryl, or C₇ - C₁₀ alkaryl.

8. The composition of claim 7 wherein the alkyl (meth)acrylate of the first copolymer is ethyl acrylate, wherein R is methyl, R₁ is H or CH₃ , R₂ is H or CH₃, wherein n is 10, and wherein the alkyl (meth)acrylate of the second copolymer is methyl methacrylate and the alkyl acrylate of the second copolymer is ethyl acrylate.

9. A composition which is an optically clear, miscible blend of
(a) from 30 to 80 weight percent of a first copolymer of:
(i) from 60 to 95 weight percent of polymerized units of at least one alkyl (meth)acrylate;
(ii) from 5 to 40 weight percent of polymerized units of at least one poly(alkyleneoxy) (meth)acrylate of the formula
CH₂=CR-C(O)-O-(CH₂-CHR₁-O)ₙ-R₂,
wherein R and R₁ separately are H or CH₃, wherein R₂ is H or -CH₃ and wherein n is 3 to 50; the glass temperature (T_{g}) (as measured by differential scanning calorimetry) of the first copolymer being below 20 °C. and the weight-average molecular weight (M_{w}) of the first copolymer being 30,000 or less;
(b) from 20 to 70 parts by weight of the first and second copolymers combined of a second copolymer derived from:
(i) from 60 weight percent to 95 weight percent of polymerized units of methyl methacrylate;
(ii) from 5 to 40 weight percent of polymerized units of at least one C₁-C₂₀ alkyl acrylate;
the glass temperature of the second copolymer being above 20 °C. and the weight-average molecular weight (M_{w}) of the copolymer blend being from 30,000 to 45,000 when R₂ is H, and from 30,000 to 200,000 when R₂ is CH₃.

10. A film, sheet, rod, or optical fiber prepared from the composition of claim 1, claim 7 or claim 9.

11. The film of claim 10 laminated between two sheets of glass or optically clear plastic.
